**Europäisches Patentamt**

**European Patent Office**

**Office européen des brevets**

(19)

(11) Publication number : **0 450 084 B1**

# EUROPEAN PATENT SPECIFICATION

(12)

(45) Date of publication of patent specification :
**09.08.95 Bulletin 95/32**

(51) Int. Cl.$^6$ : **G05B 19/19,** G05B 19/23, G05D 3/12

(21) Application number : **90913549.3**

(22) Date of filing : **17.09.90**

(86) International application number :
**PCT/JP90/01186**

(87) International publication number :
**WO 91/05295 18.04.91 Gazette 91/09**

(54) **CLOSED LOOP SERVO MOTOR CONTROL METHOD.**

(30) Priority : **26.09.89 JP 248032/89**

(43) Date of publication of application :
**09.10.91 Bulletin 91/41**

(45) Publication of the grant of the patent :
**09.08.95 Bulletin 95/32**

(84) Designated Contracting States :
**DE FR GB**

(56) References cited :
**EP-A- 0 020 024**
**EP-A- 0 290 618**
**JP-A- 6 159 509**
**JP-A- 6 373 310**
**JP-A- 6 375 909**

(73) Proprietor : **FANUC LTD.**
**3580, Shibokusa Aza-Komanba, Oshino-mura**
**Minamitsuru-gun, Yamanashi 401-05 (JP)**

(72) Inventor : **IWASHITA, Yasusuke Fanuc Dai-3**
**Vira-karamatsu**
**3527-1, Shibokusa**
**Oshino-mura**
**Minamitsuru-gun**
**Yamanashi 401-05 (JP)**

(74) Representative : **Billington, Lawrence Emlyn et al**
**Haseltine Lake & Co**
**Hazlitt House**
**28, Southampton Buildings**
**Chancery Lane**
**London WC2A 1AT (GB)**

EP 0 450 084 B1

## Description

Technical Field

The present invention relates to a closed-loop servomotor control method excellent in both control stability and responsiveness.

Background Art

It is known that the position and speed of a servomotor, as well as the position of a machine moving part, can be feedback-controlled on the basis of feedback signals delivered individually from a position sensor and a speed sensor that are attached to the machine moving part and the servomotor, respectively. A linear scale and a pulse coder are used individually as the two sensors, for example. In a mechanical system to which the closed-loop servomotor control method of this type is applied, the servomotor and the machine moving part are spring-connected to each other at a junction, or otherwise, components of the junction, e.g., a ball screw and a ball nut, are spring-connected to each other. Accordingly, the rigidity of the junction is low.

Thus, the speed of rotation or linear movement of the machine moving part sometimes fails to correspond precisely to the rotating speed of the motor. If the movement of the machine moving part is subject to a follow-up delay with respect to the motor rotation, energy is accumulated in the junction which serves as spring means. Thereafter, the accumulated energy is discharged, and an action force to act in the machine moving part moving direction is applied to the machine moving part. The machine moving part vibrates as the energy is accumulated or discharged in this manner.

If the degree of bond between the junction components is low, the resonance frequency of the junction sometimes lowers to the frequency band of a speed loop. In this case, the stability of speed control is lowered, and vibration is liable to be produced in the machine moving part. If the gain of the speed loop is reduced to lower the frequency band of the speed loop, in order to prevent the vibration and to improve the control stability, the gain of a position loop should inevitably be also reduced. In consequence, the responsiveness of a servo system lowers.

Disclosure of the Invention

The object of the present invention is to provide a closed-loop servomotor control method excellent in both control stability and responsiveness.

In order to achieve the above object, according to the present invention, there is provided a closed-loop servomotor control method for feedback-controlling the position and speed of a servomotor on the basis of a position sensor output, which is indicative of the actual position of a machine moving part operatively connected to the servomotor, and a speed sensor output, which is indicative of the actual servomotor speed. This control method comprises: a process (a) for detecting the actual speed of the machine moving part on the basis of the position sensor output; a process (b) for obtaining the difference between the actual speed of the machine moving part thus detected and the actual servomotor speed represented by the speed sensor output; and a process (c) for correcting a torque command value for the servomotor in accordance with the speed difference.

According to the present invention, as described above, the target output torque of the servomotor is corrected in accordance with the speed difference between the actual speed of the machine moving part detected on the basis of the position sensor output and the actual servomotor speed represented by the speed sensor output, so that the actual speed of the machine moving part and the actual servomotor speed can be made to correspond precisely to each other, and the machine moving part can always be moved following the motor rotation. Even when the resonance frequency of a mechanical system including the machine moving part is low, therefore, vibration of the mechanical system can be restrained, so that the control stability of the servo system is improved. As a result, the gain of the servo system can be increased, so that the responsiveness of the servo system is improved.

Brief Description of the Drawings

Fig. 1 is a block diagram showing a servo system for embodying a control method according to one embodiment of the present invention;
Fig. 2 is a schematic view showing a digital servo circuit for embodying the control method associated with Fig. 1 and its peripheral elements;
Fig. 3 is a flow chart illustrating a speed loop control process executed by means of the servo circuit of Fig. 2;
Fig. 4 is a graph showing the result of a calculation made to evaluate the stability of the servo system to which the method of the present invention is applied; and
Fig. 5 is a block diagram showing a conventional control system.

Best Mode of Carrying Out the Invention

Referring first to Fig. 5, a conventional closed-loop servomotor system will be described in brief.

The servo system of Fig. 5 is attached to a machine which is represented by a fifth transfer element 6 in Fig. 5. A moving part of this machine is operatively connected to a servomotor, which is represented by third and fourth transfer elements 3 and 4, by means of a junction 5, e.g., a ball screw/ball nut mechanism. The servo system comprises a position loop and a speed loop which correspond to first and second transfer elements 1 and 3, respectively, and also comprises a position sensor and a speed sensor which are formed of, for example, a linear scale and a pulse coder for detecting the actual moved position of the machine moving part and the actual rotating speed of the servomotor, respectively.

In the position loop, a positional deviation, which is decided depending on a position command Pc delivered from a numerical control device and a feedback signal Pf from a sixth transfer element indicative of the actual moved position of the machine moving part, is multiplied by a position gain Kp to obtain a speed command Vc. In other words, the position of the servomotor, as well as the position of the machine moving part, are feedback-controlled. In the speed loop, moreover, a velocity deviation, which is decided depending on the speed command Vc and a feedback signal Vf indicative of the actual servomotor speed, is subjected to proportional integration using an integral gain k1 and a proportional gain k2, to obtain a torque command (current command) Tc. Namely, the speed of the servomotor is feedback-controlled. The operation of the servomotor is controlled in accordance with the torque command. In Fig. 5, symbols Kt, Jm and JL designate the torque constant of the servomotor, motor inertia, and inertia of the machine moving part, respectively.

According to the conventional closed-loop servomotor control method of this type, the control stability is lowered and the machine moving part is subjected to vibration, due to the low rigidity of the junction 5 between the servomotor and the machine moving part. If the integral gain k1 and the proportional gain k2 of the speed loop are reduced, in order to improve the control stability and prevent the vibration, moreover, the position gain Kp of the position loop, which has the speed loop as its minor loop, cannot be made great, so that the responsiveness is lowered.

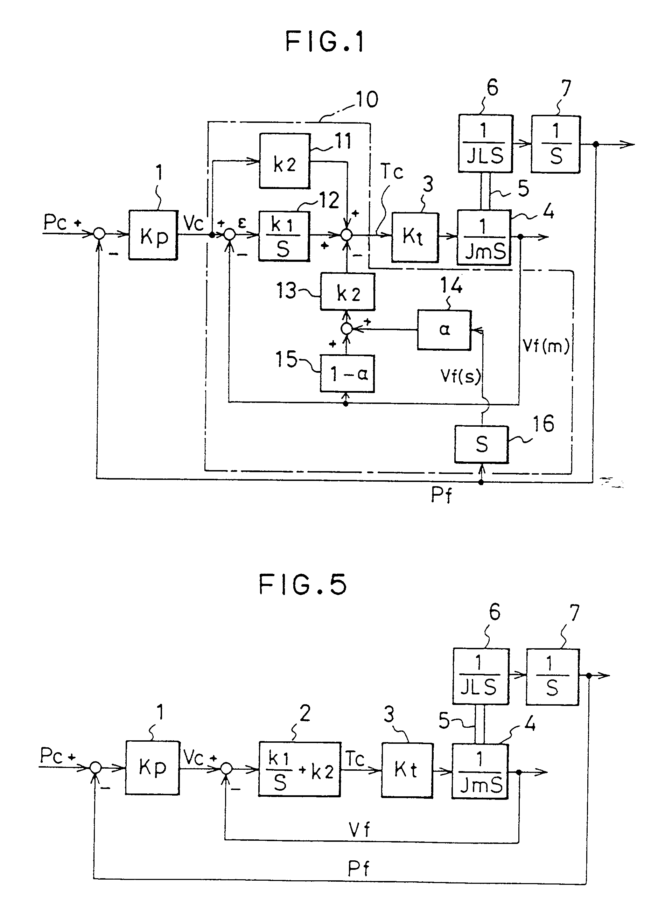

Referring now to Fig. 1, a servo system for embodying a closed-loop servomotor control method according to one embodiment of the present invention will be described. In Fig. 1, like reference numerals are used to designate the same elements as the ones shown in Fig. 5, and a description of those elements is omitted.

The servo system of Fig. 1 comprises a speed control section 10 which, including seventh to twelfth transfer elements 11 to 16, etc., corresponds to the second transfer element 2 of Fig. 5. A speed command Vc from a position loop is multiplied by a proportional gain k2 in the seventh transfer element 11, a velocity deviation ε, which is obtained by subtracting a feedback signal Vf(m) from a speed sensor, indicative of the actual servomotor speed, from the speed command Vc, is integrated in the eighth transfer element 12, and the resulting integral value is multiplied by an integral gain k1. In the eleventh transfer element 15, the feedback signal Vf(m) is multiplied by a value "1 - $\alpha$" (symbol $\alpha$ represents a parameter value). A feedback signal Pf from a position sensor, indicative of the actual moved position of a machine moving part, is differentiated in the twelfth transfer element 16 to be converted into a signal indicative of an actual moving speed Vf(s) of the machine moving part. In the tenth transfer element 14, the signal Vf(s) is multiplied by the parameter value $\alpha$.

In the ninth transfer element 13, the sum of the output $\alpha$Vf(s) of the tenth transfer element 14 and the output $(1 - \alpha)$Vf(m) of the eleventh transfer element 15 is multiplied by the proportional gain k2. Also, the output of the ninth transfer element is subtracted from the sum of the output k2Vc of the seventh transfer element 11 and the output $\epsilon$k1/S of the eighth transfer element 12, whereby a torque command Tc, which is given by equation (1) and equation (2) obtained by rearranging equation (1), is produced.

$$Tc = k1\epsilon/S - k2\{(1 - \alpha)Vf(m) + \alpha Vf(s) - Vc\}. \quad (1)$$

$$Tc = \{(k1/S) + k2\}\epsilon + \alpha k2(Vf(m) - Vf(s))\}. \quad (2)$$

If the servomotor speed Vf(m) and the machine moving part speed Vf(s) are substantially equal to each other because the spring rigidity of a junction 5 between a servomotor and the machine moving part is high, the second term of equation (2) is negligible, so that the torque command value Tc is substantially equal to the torque command value $\{(k1/S) + k2\}\epsilon$ in the servo system of Fig. 5. If there is a speed difference Vf(m) - Vf(s) because the rigidity of the junction 5 is low, on the other hand, the torque command value Tc is corrected for an increase or decrease, depending on the size and sign (plus or minus) of the speed difference, taking advantage of the contribution of the second term of equation (2).

More specifically, the movement of the machine moving part does not follow the rotation of the motor, so that if the motor speed Vf(m) is higher than the moving part speed Vf(s), a correction amount equal to the product of the speed difference and $\alpha$k2 is added to an ordinary torque command value. As a result, the motor output torque increases, so that a follow-up delay of the machine moving part is removed. If energy accumulated in the junction 5 is discharged, and if an action force to urge the machine moving part in its moving direction is applied to the machine moving part so that the moving part speed is higher than the motor speed, on the other hand, the correction amount is subtracted from the ordinary torque command value so that the motor output torque is reduced to countervail the action force. After all, the torque command value is corrected as required, depending on the presence, size, and sign (plus or minus) of the speed difference Vf(m) - Vf(s), so that the speed difference becomes zero or that the vibration of the machine moving part is restrained.

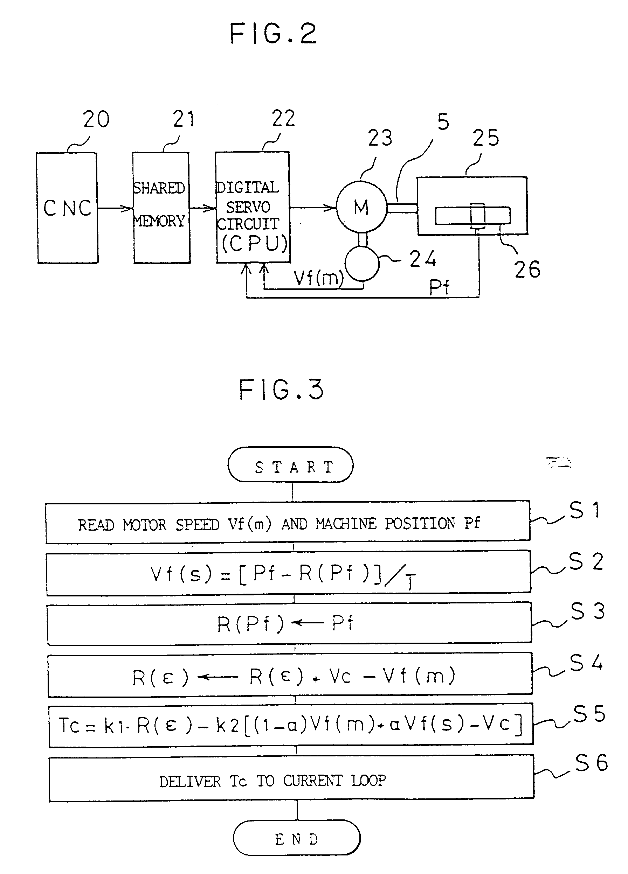

Referring now to Fig. 2, a specific example of the servo system for embodying the control method of the aforementioned embodiment will be described.

The servo system comprises a digital servo circuit 22 which is connected through a shared memory 21 to a numerical control device 20 with a built-in computer for signal transfer between itself and the device. This servo circuit is composed of a processor, a read-only memory, a random access memory, etc. Further, the servo system comprises servomotors 23 for driving their corresponding ones of various moving parts (one of which is denoted by numeral 25) of a machine tool, a speed sensor 24, e.g., a pulse coder, attached to each servomotor to detect the actual moved position thereof, and a position sensor 26, e.g. a linear scale, attached to each machine moving part 25 to detect the actual moved position thereof. These elements 23, 24 and 26 are connected to the servo circuit 22. The processor of the digital servo circuit 22 is operable to control the operation of the servomotor 23 by periodically executing a conventional position loop process, a speed loop process, and a conventional current loop process by means of software in accordance with a position command periodically delivered from a processor of the numerical control device 20 through the shared memory 21. The processor contains therein a first register for storing the feedback signal Pf from the position sensor 26 and a second register for storing the integrated value of the feedback signal Vf(m) from the speed sensor 24.

At the start of the speed loop process executed at intervals of a predetermined period T, the processor of the servo circuit 22 reads the feedback signals Pf and Vf(m) delivered from the position sensor 26 and the speed sensor 24, respectively (Step S1 of Fig. 3). Then, the processor subtracts a stored value R(Pf) in the first register, which is indicative of the feedback signal Pf for the preceding processing period, from the feedback signal Pf thus read, thereby calculating the actual movement of the machine moving part 25 during the time interval between the point of time when the feedback signal Pf for the preceding processing period is read and the point of time when the signal Pf for the present period is read. Then, the processor divides the actual movement by the predetermined period T to obtain the actual moving speed Vf(s) of the moving part 25, in order to fulfill the differentiating function of the twelfth transfer element 16 of Fig. 1 (Step S2), and loads the position feedback signal Pf for the present period, read in Step S1, into the first register (Step S3).

In Step S4, the processor subtracts the speed feedback signal Vf(m), read in Step S1, from the speed command Vc previously obtained in the position loop process, thereby obtaining the velocity deviation ε. In order to fulfill the integrating function of the eighth transfer element 12 of Fig. 1, moreover, the processor adds the velocity deviation ε to a stored value R(ε) in the second register, thereby obtaining a new integrated value R(ε) of the velocity deviation ε, and loads the resulting value into the second register. Then, the processor calculates the torque command value Tc according to equation (1) (Step S5). More specifically, the integrated value R(ε) of the velocity deviation ε is multiplied by the integral gain k1 of the speed loop to obtain a value corresponding to the first term of equation (1). Then, the speed command Vc is subtracted from the sum of the product of the speed feedback signal Vf(m) and the value "1 - α" obtained from the preset parameter value α and the product of the parameter value α and the actual speed Vf(s) of the moving part. The result of this subtraction is multiplied by the proportional gain k2 of the speed loop to obtain a value corresponding to the second term of equation (1). Further, the value $k2\{(1 - α)Vf(m) + αVf(s) - Vc\}$ is subtracted from the previously obtained value $k1R(ε)$ to obtain the torque command value Tc. Based on this torque command value Tc, moreover, the current loop process for obtaining the servomotor driving current is started (Step S6).

The inventor hereof made a calculation for evaluating the stability (attenuation characteristic) of the servo system to which the method of the present invention is applied. In making this calculation, the inertia JL of the machine moving part was adjusted to a value five times as high as the motor inertia, and the integral gain k1 and the proportional gain k2 were set so that the frequency band of the speed loop was at 7 Hz. Calculated was the complex-plane position of a real part Re(Sa) of the representative characteristic root of a characteristic equation which corresponds to the transfer function formula (ratio of an actual position Pf(S) of machine moving part to a position command Pc(S)) of the servo system, obtained when the resonance frequency fm of the mechanical system was adjusted to 200 Hz, 10 Hz, or 5 Hz with the parameter value α (0 < α < 1) varying.

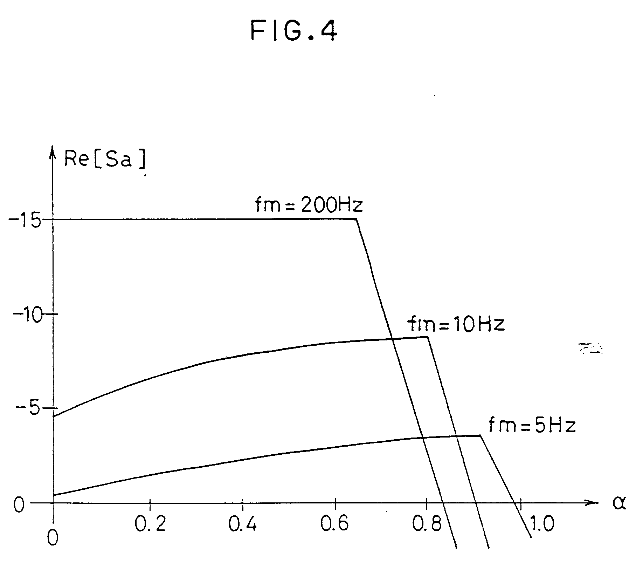

Fig. 4 shows the result of the calculation. In Fig. 4, the axis of ordinate represents the imaginary-axis negative-direction position of the real part Re(Sa) of the representative characteristic root on a complex plane, while the axis of abscissa represents the parameter value α. In general, if the real part is situated farther from the imaginary axis with respect to the negative direction, the stability of the servo system increases. As seen from Fig. 4, the lower the resonance frequency fm of the mechanical system, the greater the effect of the method of the present invention is. Namely, if the resonance frequency fm is at 10 Hz or 5 Hz, and if the method of the present invention is not applied (α = 0), the real part of the representative characteristic root is situated close to the imaginary axis. As the parameter value α increases, the position of the real part becomes more distant from the imaginary axis with respect to the negative direction. This indicates that the stability of the servo system increases if the method of the present invention is applied.

## Claims

1. A closed-loop servomotor control method for feedback-controlling the position and speed of a servomotor (23) based on a position sensor output (Pf), which is indicative of an actual position of a machine moving part (25) operatively connected to the servomotor (23), and a speed sensor output (Vf(m)), which is indicative of an actual servomotor speed, the closed-loop servomotor control method being characterized by the following sequence of steps:

    (a) detecting the actual speed (Vf(s)) of the machine moving part (25) based on the position sensor output (Pf);
    (b) obtaining a difference between the thus detected actual speed (Vf(s)) of the machine moving part (25) and the actual servomotor speed (Vf(m)) represented by the speed sensor output; and
    (c) correcting a torque command value (Tc) for of the servomotor (23) in accordance with the speed difference.

2. A servomotor control method according to claim 1, wherein said step (c) includes increasing the torque command value (Tc) when the actual servomotor speed (Vf(m)) is higher than the actual speed (Vf(s)) of the machine moving part (25), and decreasing the torque command value (Tc) when the actual speed (Vf(s)) of the machine moving part (25) is higher than the actual servomotor speed (Vf(m)).

3. A servomotor control method according to claim 2, wherein the torque command value (Tc) is increased or decreased in proportion to a size of the speed difference.

## Patentansprüche

1. Servomotor-Regelungsverfahren, das einen geschlossenen Regelkreis benutzt, zur Rückkopplungsregelung der Position und der Geschwindigkeit eines Servomotors (23) auf der Grundlage eines Positionssensor-Ausgangssignals (Pf), das bezeichnend für eine Ist-Position eines sich bewegenden Maschinenteils (25) ist, welches wirksam mit dem Servomotor (23) verbunden ist, und eines Geschwindigkeitssensor-Ausgangssignals (Vf(m)), das bezeichnend für eine Ist-Servomotorgeschwindigkeit ist, welches Servomotor-Regelungsverfahren, das den geschlossenen Regelkreis benutzt, durch die im folgenden angegebene Reihe von Schritten **gekennzeichnet** ist:

    (a) Erfassen der Ist-Geschwindigkeit (Vf(s)) des sich bewegenden Maschinenteils (25) auf der Grundlage des Positionssensor-Ausgangssignals (Pf),
    (b) Gewinnen einer Differenz zwischen der auf diese Weise erfaßten Ist-Geschwindigkeit (Vf(s)) des sich bewegenden Maschinenteils (25) und der Ist-Servomotorgeschwindigkeit (Vf(m)), die durch das Geschwindigkeitssensor-Ausgangssignal repräsentiert ist, und
    (c) Korrigieren eines Drehmoment-Befehlswerts (Tc) für den Servomotor (23) in Übereinstimmung mit der Geschwindigkeitsdifferenz.

2. Servomotor-Regelungsverfahren nach Anspruch 1, bei dem Schritt (c) das Erhöhen des Drehmoment-Befehlswerts (Tc) enthält, wenn die Ist-Servomotorgeschwindigkeit (Vf(m)) höher als die Ist-Geschwindigkeit (Vf(s)) des sich bewegenden Maschinenteils (25) ist, und das Erniedrigen des Drehmoment-Befehlswerts (Tc) enthält, wenn die Ist-Geschwindigkeit (Vf(s)) des sich bewegenden Maschinenteils (25) höher als die Ist-Servomotorgeschwindigkeit (Vf(m)) ist.

3. Servomotor-Regelungsverfahren nach Anspruch 2, bei dem der Drehmomentbefehlswert (Tc) proportional zu einer Größe der Geschwindigkeitsdifferenz erhöht oder erniedrigt wird.

## Revendications

1. Un procédé de commande de servomoteur à boucle fermée pour la commande en contre-réaction de la position et de la vitesse d'un servomoteur (23) sur la base d'un signal de sortie (Pf) d'un capteur de position, signal qui est indicateur d'une position réelle d'une partie mobile de machine (25) reliée de manière opérationnelle au servomoteur (23), et un signal de sortie (Vf(m)) d'un capteur de vitesse, signal qui est indicateur d'une vitesse réelle du servomoteur, le procédé de commande de servomoteur à boucle fermée étant caractérisé par la succession suivante d'opérations :

    (a) détecter la vitesse réelle (Vf(s)) de la partie mobile de machine (25) sur la base du signal de sortie (Pf) du capteur de position ;
    (b) obtenir une différence entre la vitesse réelle (Vf(s)) ainsi détectée de la partie mobile de machine (25) et la vitesse réelle (Vf(m)) du servomoteur représentée par le signal de sortie du capteur de vitesse ; et
(c) corriger une valeur (Tc) d'ordre de couple
pour le servomoteur (23) en accord avec la
différence de vitesse.

2. Un procédé de commande de servomoteur selon
la revendication 1, dans lequel ladite opération
(c) comprend le fait d'augmenter la valeur (Tc)
d'ordre de couple lorsque la vitesse réelle (Vf(m))
du servomoteur est supérieure à la vitesse réelle
(Vf(s)) de la partie mobile de machine (25), et de
diminuer la valeur (Tc) d'ordre de couple lorsque
la vitesse réelle (Vf(s)) de la partie mobile de machine (25) est supérieure à la vitesse réelle
(Vf(m)) du servomoteur.

3. Un procédé de commande de servomoteur selon
la revendication 2, dans lequel la valeur (Tc) d'ordre de couple est augmentée ou diminuée proportionnellement à une valeur de la différence de
vitesse.

# FIG.1

# FIG.5

# FIG.2

# FIG.3

START

| READ MOTOR SPEED Vf(m) AND MACHINE POSITION Pf | S1 |

$$Vf(s) = [Pf - R(Pf)]/T$$  S2

$$R(Pf) \leftarrow Pf$$  S3

$$R(\epsilon) \leftarrow R(\epsilon) + Vc - Vf(m)$$  S4

$$Tc = k1 \cdot R(\epsilon) - k2[(1-a)Vf(m) + aVf(s) - Vc]$$  S5

| DELIVER Tc TO CURRENT LOOP | S6 |

END

FIG.4